# EUROPEAN PATENT SPECIFICATION

(11) **EP 3 956 198 B1**
(45) Date of publication and mention of the grant of the patent: **07.06.2023**
(21) Application number: 20723018.6
(22) Date of filing: 16.04.2020
(51) Int. Cl.: B62B 3/14

(54) **SHOPPING TROLLEY WITH A MOVABLE REAR WALL FACILITATING ACCESS TO THE BASKET**
EINKAUFSWAGEN MIT EINER BEWEGBAREN RÜCKWAND ZUR ERLEICHTERUNG DES ZUGANGS ZUM KORB
CHARIOT AVEC UNE PAROI ARRIÈRE MOBILE FACILITANT L'ACCÈS À LA CORBEILLE

(30) Priority: 16.04.2019 BE 201900033
(43) Date of publication of application: 23.02.2022
(73) Proprietor: Rita Vermeulen en Partners Comm. V, 9170 Sint-Pauwels (BE)
(72) Inventor: VERMEULEN, Rita, 9170 Sint-Pauwels (BE)
(74) Representative: Brantsandpatents bv
(86) International application number: PCT/EP2020/060759
(87) International publication number: WO 2020/212521

(56) References cited:
- DE-A1- 10 118 620
- DE-A1-102004 031 237
- GB-A- 928 542
- GB-A- 995 855

## Description

### TECHNICAL FlELD OF THE INVENTION

This invention pertains to a shopping cart comprising a basket having a rear gate of an improved design. The rear gate comprises multiple sections and a frame that is rotatably attached to a transverse tube, via top hinge points and optionally an additional top support, in a unique arrangement.

### BACKGROUND OF THE INVENTION

Shopping carts are widely used in supermarkets, hardware stores and other similar and dissimilar establishments. Generally, a shopping cart has a mobile base, a handle mounted on the chassis, and a wire or plastic basket supported by the chassis. It is not yet known to provide the basket with a gate at the rear, which can be opened to facilitate the unloading of the contents of the basket from the rear of the basket.

According to a commonly used rear gate design such as disclosed in DE 101 18 620, a frame is preferably made of welded wires and has upper pivot points mounted on the transverse edge provided at the top of rear opening of the basket. This frame provided with sections can fold down, making it possible for the user of the shopping cart to remove the contents of the shopping cart in an ergonomic manner without, or at least to a much lesser extent, burdening his back.

An additional advantage is that objects can be placed in the shopping cart, such as an elongate load, which normally would not fit in the basket when the rear door is closed.

The frame can also fold up so that this shopping cart can be stored in the usual way.

This invention is the result of attempts to provide for a shopping cart a solution to the use the back gate as active pass-through design which allows to load or unload in a very simple manner.

### SUMMARY OF THE INVENTION

This invention as defined in claim 1 provides for a shopping cart with a basket having an improved design for the rear gate of the basket. Generally, the rear gate includes two uprights, a top edge frame, and means for uniquely mounting the frame on a transverse tube. The frame is mounted on the transverse tube to allow the frame to have a limited range of generally vertical movement relative to the stanchions and to swing out and up around an axis near the top edge when raised to an upper position within that range but not when lowered to a lower position within that range.

Typically, such a basket, apart from the rear cover, includes two side panels and a bottom panel attached to the side panels. The side and bottom panels can be mainly made of welded wires. Molded plastic panels can be used alternatively.

In one contemplated arrangement, the back of a frame is attached to the top of the basket of the shopping trolley. Within this frame, at least 1 section is provided that lies in the same plane as the frame in the locked position, so that it forms a back frame as in the current form of shopping carts. In the arrangement in which one or more sections are located in the same plane as the frame, this composition can fold upwards rotating around the axis of a transverse wire. This transverse wire forms the pivot point of the frame in which one or more sections are located. Since the composition is capable of rotating up to make it possible that the shopping carts are stored as is in a classical way. When combining a plurality of sections, the second section may be folded up in relation to the first section located at the bottom of the second section and is preferably rotatably arranged forming a hinged point.

According to a preferred embodiment, this hinge point is located somewhere at the bottom part of the plane of the first section.

By adding a third section, a child seat can be formed. The third section is arranged in a rotating manner, according to a preferred embodiment. According to a preferred embodiment, this pivot point is located somewhere in the bottom part of the plane of the first section. The third section is connected to the second section, but it is according to a preferred embodiment arranged to be movable with respect to the second section whereby the second section is at least 1, but preferably 2 or more are provided with hooks that move in a certain path. As a result, the third section can be folded and located in the same plane as section A. In the first and second section are made in such a way that the whole of the three sections can unfold in one whole state.

When folded up, the three sections forms one plane, the purpose of which is to provide a fold-out surface in which the contents of the shopping cart can be pulled out of the basket of the shopping cart from the rear and in which the combination of the 3 sections fulfills the role of unloading platform. Preferably, the combination of the 3 sections remains in a horizontal position and in line with the shopping cart basket. To achieve this, a support is provided that can support the combination of the 3 sections. According to a preferred embodiment, this support is a kind of frame which is arranged rotatably on the frame of the shopping cart. Upon deployment of this support, there is a base support on which the combination of the 3 sections can rest and a stable platform is formed. The combination of the 3 sections can have 1 or more, but preferably 20 or more, rolling elements which make it easy to move the load from the basket over the combination of the 3 sections.

In the first section is also one aperture, but according to a preferred embodiment, two openings are provided in the upper part of the surface and above the pivot point of the 3th section. This space is for the child's legs when seated on the child seat.

In accordance with a preferred embodiment, the frame is rotatably connected with the wire at the top of the back of the basket of the shopping trolley. On the upper side at the part which is parallel with the wire from the top of the back of the basket of the shopping trolley is a protection means. When unlocking the frame, at least the first section will fall back. This movement is limited by a safety means that stops the fall. The first section, after unlocking the frame, will be set in a certain position by the safety means, after which the first section can be released from the safety means and brought into the unloading position in a controlled manner.

One of the great advantages of the present invention is that it can be implemented with existing shopping carts without any modifications to be made to the basket itself. The only thing that must be done is that the existing rear frame must be removed and replaced by the frame provided with the sections.

These and other objects, features, and advantages of this invention are evident from the following description of a preferred embodiment of this invention with reference to the accompanying drawings.

### BRIEF DESCRIPTION OF THE DRAWINGS

Fig. 1 is a perspective view of a shopping cart, including a basket with a rear gate according to the present invention and comprising the frame in horizontal rest position supported by the unfolded support.
Fig. 2 is a further perspective view of a shopping cart, including a basket with a rear gate according to the present invention and comprising the frame in horizontal rest position supported by the unfolded support.
Fig. 3 is an additional perspective view of a shopping cart including a basket with a rear gate according to the present invention and comprising the frame in vertical rest position with partially collapsed sections and partially unfolded sections with the unfolded sections forming a child seat.
Fig. 4 is an additional perspective view of a shopping cart including a basket with a rear gate according to the present invention and comprising the frame in vertical rest position with sections partially in a second vertical rest position.
Fig. 5 is an additional perspective detailed view of a shopping cart of the rear gate according to the present invention and including the frame and sections in vertical rest position.
Fig. 6 is an additional perspective view of a shopping cart including a rear gate basket according to the present invention and comprising the frame and sections in a parking position.
Fig. 7 is an additional perspective view of a shopping cart including a basket with a rear gate according to this invention and comprising an exploded view of the frame, sections and associated parts in vertical rest position.
Fig. 8 is an additional exploded view of the frame, sections and associated parts in vertical rest position.
Fig. 9 is an additional perspective view of the details of the locking pin and its 2 cover plates.
Fig. 10 is an additional perspective view of the details of the locking pin and its 2 cover plates mounted together.
Fig. 11 is an additional perspective view of the first hinge point and the details of the locking pin and its 2 cover plates in an assembled arrangement.
Fig. 12 is an additional perspective view of the first hinge point and the details of the locking pin and its 2 cover plates in an assembled arrangement.
Fig. 13 is an additional perspective view of the details of the support member in the folded position.
Fig. 14 is an additional perspective view of the details of the support element in the unfolded position.

### Components:

- 1.: Shopping cart
- 2.: Basket
- 3.: Frame
- 4.: Section A
- 5.: Section K
- 6.: Section Z
- 7.: Rolling elements
- 8.: Blocking device
- 9.: Hinge point frame
- 10.: Hinge point K
- 11.: Blocking pin
- 12.: Support element
- 13.: Handle
- 14.: Lock pin
- 15.: Cover plate A
- 16.: Cover plate B
- 17.: Cover plate C
- 18.: Transverse wire
- 19.: Movable chassis
- 20.: Hinge chassis
- 21.: Hinge support
- 22.: Pivot point support
- 23.: Wheels
- 24.: Tailgate (frame + sections)
- 25.: Hinge Z
- 26.: Back frame
- 27.: Cutout
- 28.: Sliding pins
- 29.: Hinge Frame

### DETAILED DESCRIPTION OF A PREFERRED EMBODIMENT

Below is an explanation of each item without limiting any item.
- Frame 3: this is a shape consisting of 2 horizontal and 2 vertical sides that together form a base for accommodating one or more sections. This may comprise wires that are welded, of plastic parts or similar other supporting material or a combination of the foregoing materials and techniques.
- Basket 2: this is the part of the shopping cart where the groceries are stored and comprises 1 bottom and 3 upright walls. The rear section is still connected by at least 1 wire or tube connecting the 2 side walls.
- Section A 4: is a part that forms the back of the shopping cart basket. This may comprise wires that are welded, plastic parts or similar other supporting material or a combination of the foregoing materials and techniques.
- Section K 5: is a part which forms the back of the basket of the shopping bag in combination with section A but it can unfold relative to section A. This may comprise wires that are welded, plastic parts or similar other supporting material or a combination of the foregoing materials and techniques.
- Section Z 6: is a part which forms the back of the basket of the shopping bag in combination with section A but it can fold with respect to the sections A and K, and includes connectors for Section K. This may com prise wires that are welded, plastic parts or similar other supporting material or a combination of the foregoing materials and techniques.
- Chassis 19: This is the part that carries the shopping cart basket and that the wheels of the cart are attached to.
- Hinge point frame 9: this is the part attached to the frame and which is placed around the wire or tube at the top of the back of the basket.
- Hinge chassis 20 this is a hinge point mounted on the chassis and allows lock pin to pass through. This may comprise metal parts, plastic parts or any other supporting material or a combination of the foregoing materials and techniques.
- Hinge support 21: this is a hinge point attached to the frame and offers the possibility that the end pin runs hinged through or fixed on it. This may comprise metal parts, plastic parts or any other supporting material or a combination of the foregoing materials and techniques.
- Pivot point support 22: it is a pivot point fixed on the chassis and provides the possibility for the support element to hinge on it. This may comprise metal parts, plastic parts or any other supporting material or a combination of the foregoing materials and techniques.
- Hinge point K 10: this is a hinge point mounted on the first section and allows the second section to hinges on it. This may comprise metal parts, plastic parts or any other supporting material or a combination of the foregoing materials and techniques.
- Hinge Z 25: it is a pivot point fixed on the first section and offers the possibility that the third section is hinged to this. This may comprise metal parts, plastic parts or any other supporting material or a combination of the foregoing materials and techniques.
- Wheels 23: these are at least 3 wheels attached to the bottom of the chassis. This may comprise metal parts, plastic parts or any other supporting material or a combination of the foregoing materials and techniques.
- Section A: this is the back of the basket and forms the fourth wall of the basket. In accordance with the present invention, this consists of a combination of a frame and at least 1 section. This may comprise metal parts, plastic parts or any other supporting material or a combination of the foregoing materials and techniques.
- Lock pin 14: this ensures the blocking and positioning of the support which is pivotally mounted on the chassis. The pin is a tubular part with a widening on at least 1 of the end points. This may comprise metal parts, plastic parts or any other supporting material or a combination of the foregoing materials and techniques.
- Support element 12: this is an aid consisting support made in a certain form to support section A. This may comprise metal parts, plastic parts or any other supporting material or a combination of the foregoing materials and techniques.
- Blocking device 8: this is a fall protection and prevents section A from falling down. In the present invention, according to a preferred embodiment, this consists of a locking mechanism that can be manually unlocked. This may comprise metal parts, plastic parts or any other supporting material or a combination of the foregoing materials and techniques.

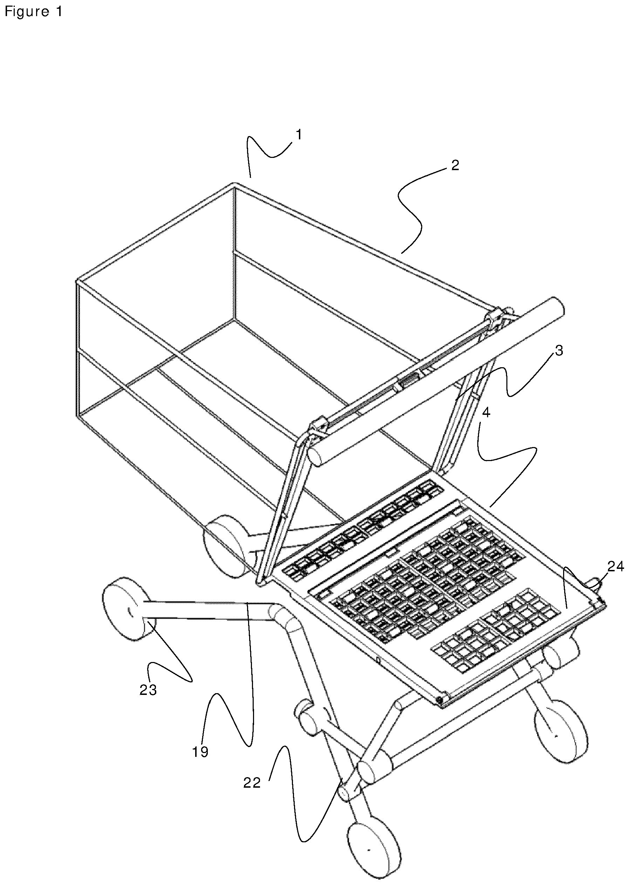

As shown in Figure 1, comprises a basket 1, a wheeled chassis 9, which is provided with wheels 23 with four wheels, a handle 13, and a basket 2. In this arrangement, section A 4 is in a horizontal position in which it is located in the extension of the basket 2. In this case, section A4, is supported by support element 12 which is folded out. The frame 3 is arranged in horizontal rest position. Section A 4 is still connected to the frame 3 via hinge point 29 of the frame 3 on the transverse wire 18.

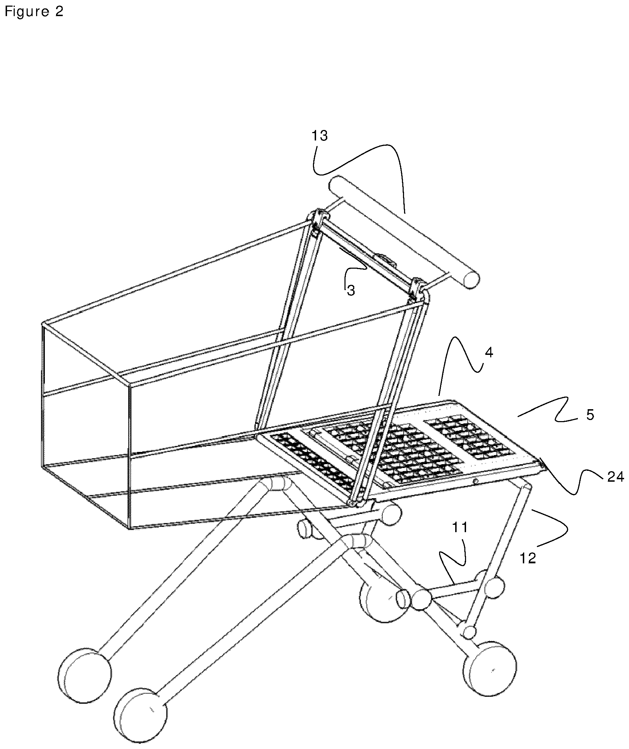

As shown in Figure 2, a shopping cart 1 includes a tailgate 24 provided with multiple sections. Section A 4 is hereby provided with section K 5 which is integrated in section A 4. Support element 12 supports section A and prevents its downward movement with the help of the locking pin 14.

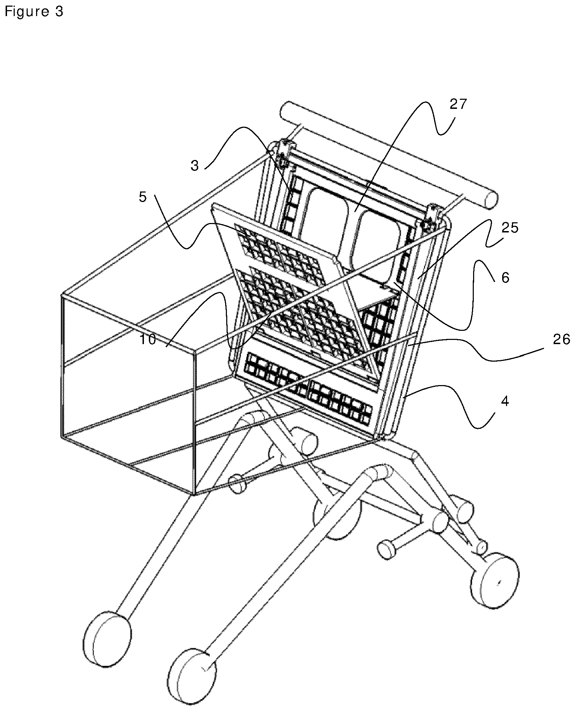

As shown in Figure 3, tailgate 24 is in horizontal rest position and the backside in this case the back frame 26 is formed by a combination of the frame 3, and section A 4. A child seat is also formed by folding out Section K 5 around the hinge point 10 of the 2nd section. The base of the child seat is formed by section Z 6.

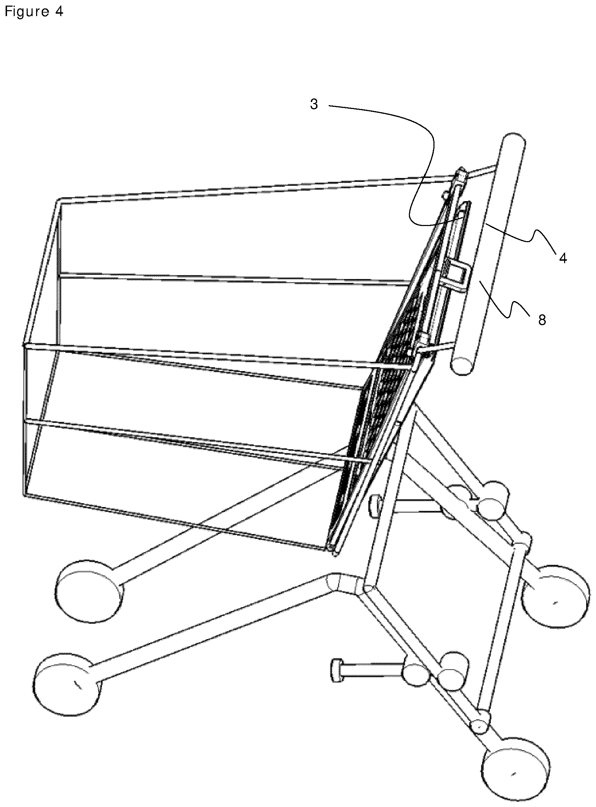

In this preferred embodiment, the hinge point Z 25 of the child seat is provided on section A 4. On the other side, sliding pins 28 are used. Section Z 6 is folded up and in a preferred embodiment section Z 6 slides down section K 5. To accomplish this, section Z provides at least 1 but preferably 2 or more sliding pins 28. These sliding pins 28 fit into the slots provided on section K 5 with a defined tolerance allowing the sliding pins 28 to move smoothly in the corresponding slots. In the position in which the tailgate 24 is in vertical rest position, and therefore the back frame 26 forms the basket 2, the support element 12 is also in the folded position, As shown in Figure 4, the tailgate 24 is blocked by at least one by preferably 2 locking pins 14. In the preferred embodiment shown, the tailgate 24 is unlocked by preferably pushing the 2 locking pins 14 to the outside of the basket 2. This creates the situation that the tailgate 24 may fall back. In order to prevent the tailgate 24 from falling freely, a blocking device 8 is provided which prevents the tailgate 24 from falling. The user can then unlock the blocking device 8 by moving the blocking part upwards and bringing the tailgate 24 to the desired position in a controlled manner.

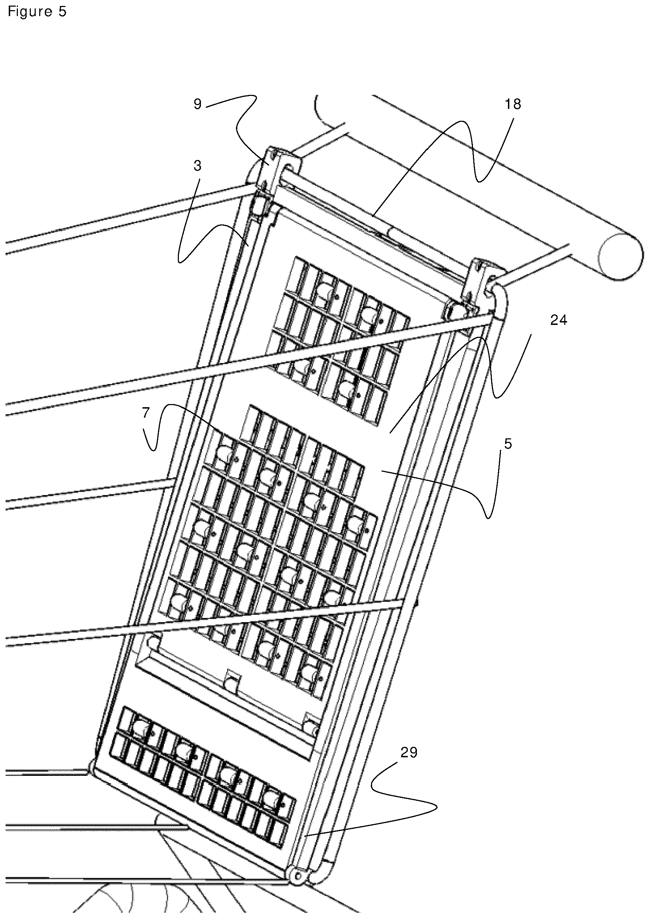

As shown in Figure 5, the back frame 26 is now in the resting position with the tailgate 24 and the frame 3 being integral. Rolling elements are provided in section A 4 and part of section K 5.

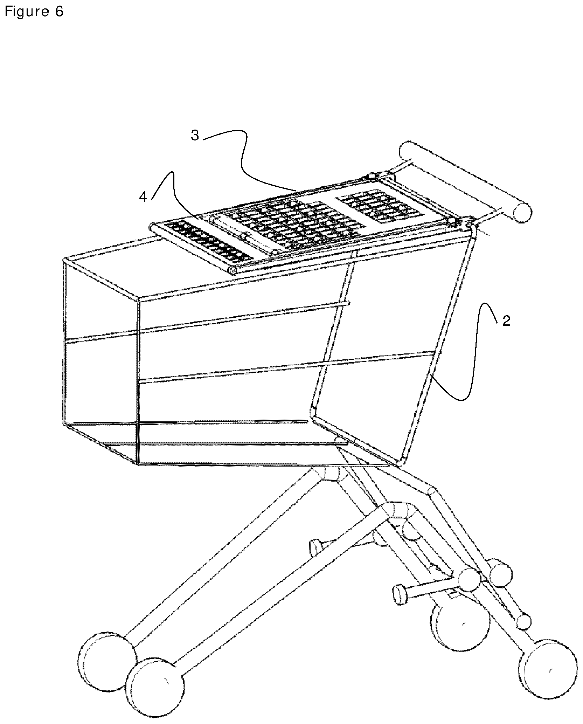

As shown in Figure 6, the back frame 26 is now in a position which occurs when the shopping carts 1 are pushed together. The back frame 26 consisting of the frame 3 and section A 4 will rest on the basket 2 of the shopping cart 1 which is slid into the basket 2 of the first shopping cart 1.

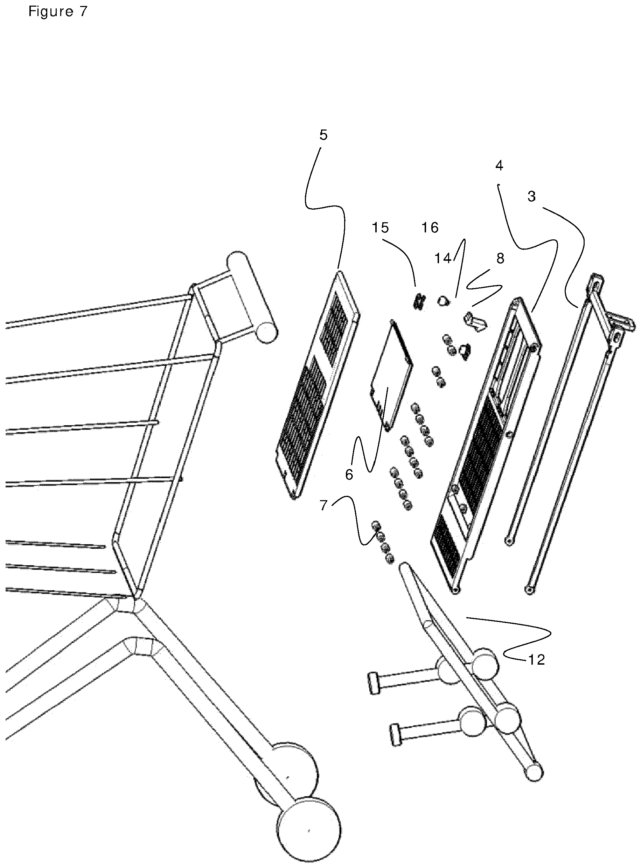

As shown in Figure 7, in the form of an exploded view, the parts of the back frame 26 are shown. Supplemented with the basic arrangement of the support element 12.

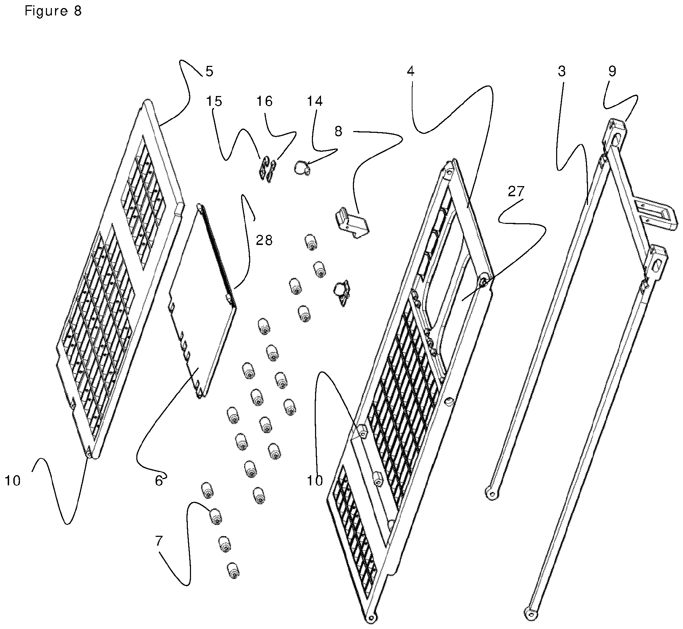

As shown in Figure 8, in the form of an exploded view, the back parts are shown. This comprises the frame 3, section A 4 with cutouts 27, Section K 5 and Section Z 6 as base, supplemented with the blocking device 8, the rolling elements 7, hinge element frame 9, hinge point K 10, locking pin 14, cover plate A 15, cover plate B 16, cover plate C 17, and sliding pins 28.

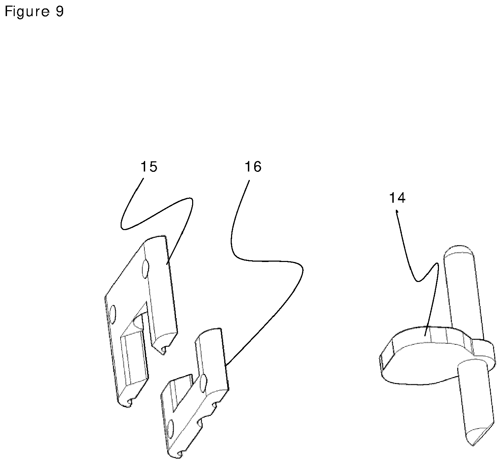

As shown in Figure 9, the details of the tailgate blocking device 14 relative to the frame 3 are shown and the 2 cover plates, cover A and cover B, which fit over the locking pin 14.

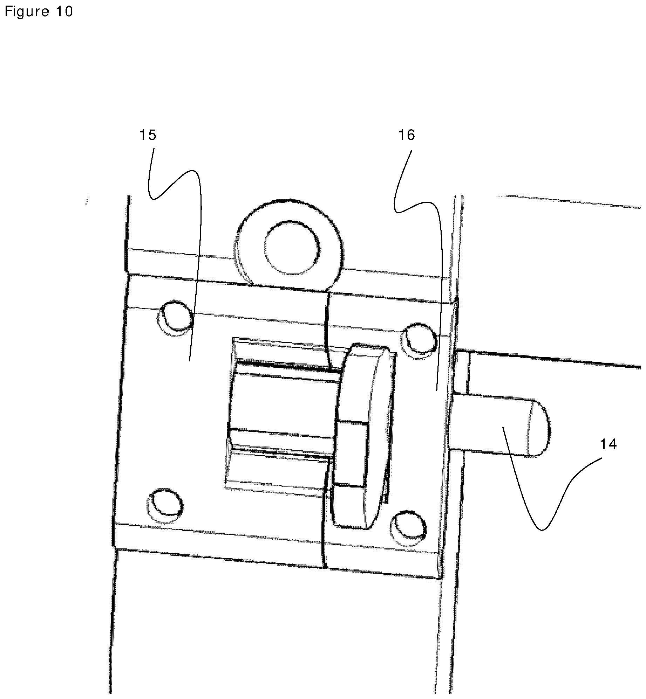

As shown in Figure 10, the details of the blocking device of the tailgate 24 with respect to the frame 3 are shown and the 2 cover plates, cover plate A 15 and cover plate B 16, which fit over the lock pin 14.

In Figure 10 you can find the assembled arrangement of the parts as described above.

The locking pin 14 is recessed in the frame 3 and is held in place by cover A 15 and cover B 16These 2 cover plates are fixed to the frame 3 via screws.

On the side of cover A 15 there is a spring on the bottom, and thus between the frame 3 and cover A 15, which has the function of pushing the locking pin 14 towards the tailgate 24 so that the tailgate 24 can be blocked with respect to the frame 3.

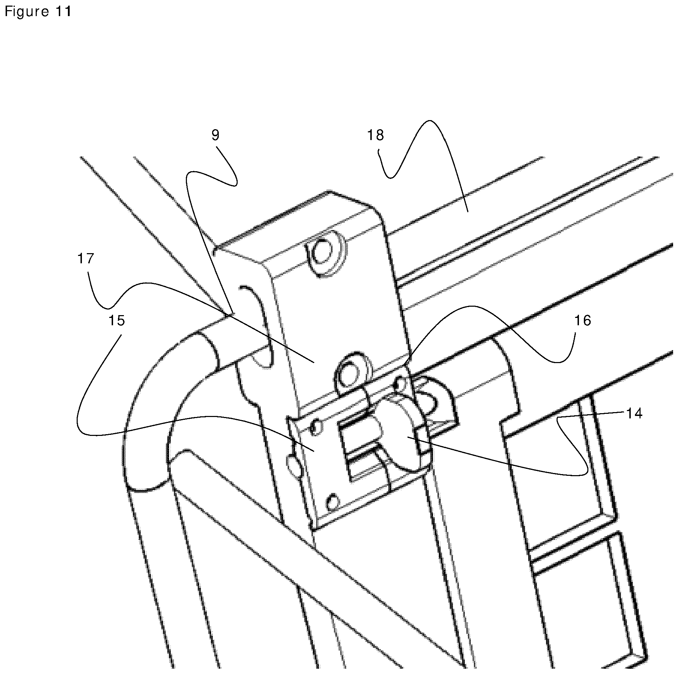

As shown in Figure 11, the details of the locking device of the tailgate 24 with respect to the frame 3 are shown, and the 2 cover plates, cover plate A 15 and cover plate B 16, which fit over the locking pin 14 as well as the cover plate C 17 By applying cover plate C 17 to the frame 3, a pivot point is created over the transverse wire 18.

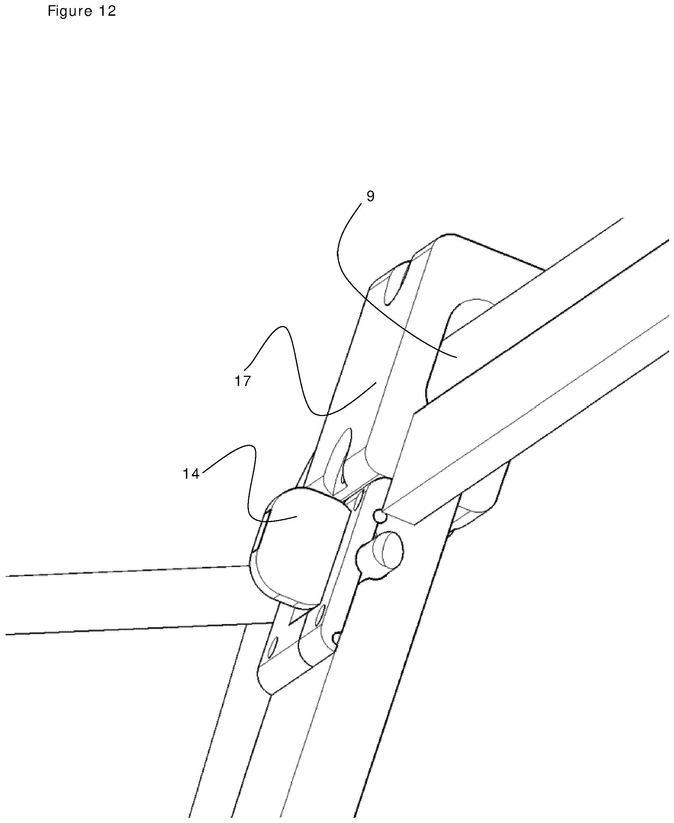

As shown in Figure 12, the details of the locking device of the tailgate 24 with respect to the frame 3 are shown, and the 2 cover plates, cover plate A 15 and cover plate B 16, which fit over the locking pin 14 and the cover plate C 17, are shown. By applying cover plate C 17 to the frame 3, a pivot point is created over the transverse wire 18.

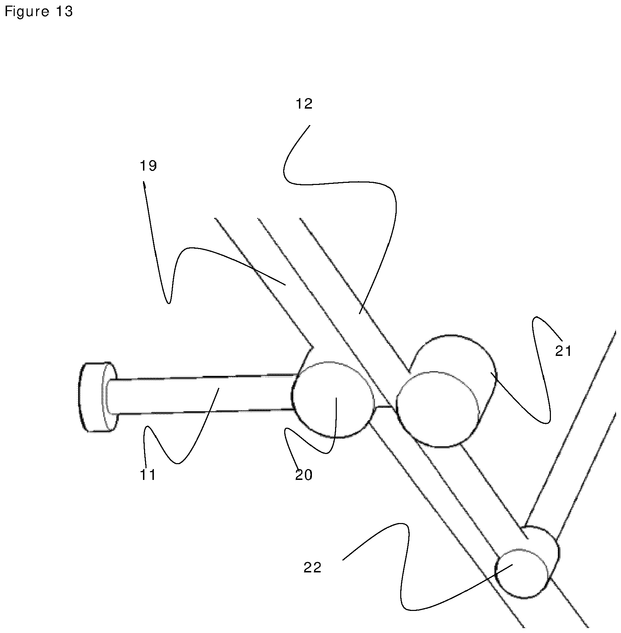

As shown in Figure 13, the support member is shown folded up. On the movable chassis 19 a hinge 20 is provided with an opening which the end of stroke pin 11 is arranged movably. The supporting element 12 has a hinge point 21 with on it a fixed attachment to the end of stroke pin 11. The support element 12 is rotatably positioned relative to the chassis 19 by means of a pivot point 22. At the end of the end of stroke pin 11 is a widening provided so that the blocking pin 11 at its maximum deflection is cannot get beyond the hinge 20 of the chassis.

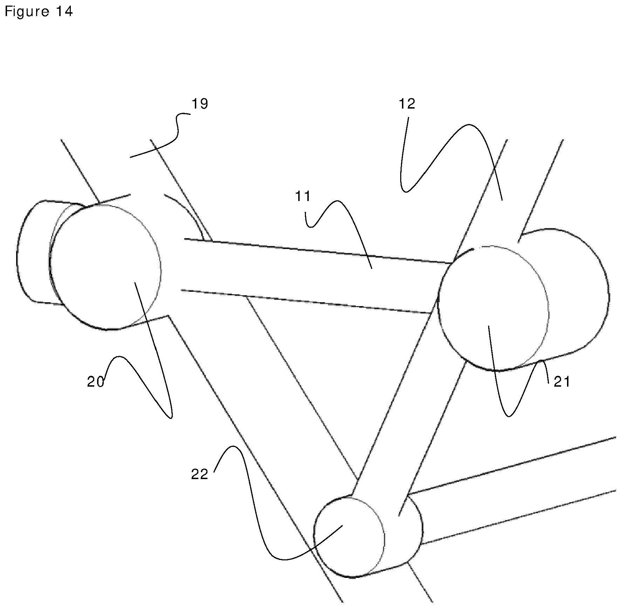

As shown in Figure 14, the support member is shown in the unfolded position. A hinge point 20 is provided on the chassis 19, with an opening which the end of stroke pin 11 is arranged movably. The supporting element 12 has a hinge point 21 with on it a fixed attachment to the end of stroke pin 11. The support element 12 is rotatably positioned relative to the chassis 19 by means of a pivot point 22. At the end of the end of stroke pin 11 is a widening provided so that the blocking pin 11 at its maximum deflection is cannot get beyond the hinge 20 of the chassis.

### Additional provisions:

- The tailgate 24 may possibly be supported differently than via a support element 12 attached to the chassis 19. Instead, this may possibly be a device attached to the frame 3 which positions the tailgate 24 at a particular position when unfolded.
- The tailgate 24 may be provided with an extendable section to extend section A 4.
- The support element 12 may possibly be equipped with a technique in which different positions are possible.
- The locking pin 14 can also be used in an inverted version as described above.
- In another preferred embodiment, section A in the horizontal position rest position is supported by a support means such as chains, ropes, an unfolding mechanism or other techniques. These supports can then be attached to the frame, making the connection between the frame and section A.

Various other modifications can be made in the above-described preferred embodiment without departing from the scope of the invention as defined in the claims.

## Claims

1. Shopping cart (1) provided with tailgate (24), said tailgate comprising at least one frame (3) provided with at least one section (4) comprising the following functionalities:
• the combination of the frame (3) and the section (4) forming one whole if used as the back of the shopping cart basket (2) or if required by other conditions;
• the frame (3) and the section (4) being movably arranged relative to each other;
• whereby with an unlocking movement on the frame (3) or basket (2) of the shopping cart (1), the at least one section (4) can be folded down by a backward rotating movement, creating an opening in the rear section of the shopping cart (1);
• **characterized in that** upon forward force towards the shopping cart (1), moving the frame (3) to the inside of the shopping cart basket (2), the frame (3) is rotated upwards around a pivot point at the top of the basket opening, allowing the shopping cart (1) to be stored in the classic way.

2. Shopping cart according to the preceding claim 1, wherein a section (4) provided in the frame (3) substantially fulfills the role of a transport device over which a load can be transported or placed.

3. Shopping cart according to any one of previous claims 1 or 2, in which a section (4) can be provided with several sections (4, 5, 6) that possibly fulfill different functions.

4. Shopping cart according to previous claim 3, comprising at least three different sections (4, 5, 6), wherein the combination of the three different sections (4, 5, 6) essentially forms a child seat positioned in the frame (3).

5. Shopping cart according to any one of previous claims 1 to 4, wherein a safety provision, preferably a locking device (8), is provided which prevents at least one section (4, 5, 6) from falling down when said at least one section (4, 5, 6) is unlocked.

6. Shopping cart according to any one of previous claims 1 to 5, wherein at least one section (4, 5, 6) is blocked by a locking device (8) provided on the frame (3).

7. Shopping cart according to any one of previous claims 1 to 6, wherein at least one section (4, 5, 6) is provided with rolling elements (7).

8. Shopping cart according to any one of previous claims 1 to 7, wherein at least one section (4, 5, 6), when folded back, is supported, making it possible to use said at least one section as an extension of the bottom of the basket.

9. Shopping cart according to previous claim 8, wherein said at least one section (4, 5, 6) is supported by a support attached to the frame of the basket (2) and possibly foldable.

10. Shopping cart according to any one of previous claims 1 to 9, wherein the frame (3) and or at least one section (4, 5, 6) is composed of several wires which are welded together.

11. Shopping cart according to any one of previous claims 1 to 9, wherein the frame (3) and / or at least one section (4, 5, 6) are built entirely or partially in plastic.

## Patentansprüche

1. Einkaufswagen (1), mit einer hinteren Klappe (24) versehen, wobei die hintere Klappe mindestens einen Rahmen (3) mit mindestens einem Abschnitt (4) umfasst, die folgenden Funktionsfähigkeiten umfassend:
• die Kombination aus Rahmen (3) und dem Abschnitt (4) bildet ein Ganzes, wenn sie als Rückseite des Einkaufswagenkorbes (2) verwendet werden oder wenn dies durch andere Bedingungen erforderlich ist,
• der Rahmen (3) und der Abschnitt (4) sind im Verhältnis zueinander beweglich angeordnet,
• wobei durch eine Lösebewegung an dem Rahmen (3) oder Korb (2) des Einkaufswagens (1) der mindestens eine Abschnitt (4) durch eine Rückwärtsdrehbewegung nach unten geklappt werden kann, was eine Öffnung in dem hinteren Abschnitt des Einkaufswagens (1) erzeugt,
• **dadurch gekennzeichnet, dass** sich der Rahmen (3) aufgrund einer nach vorn zu dem Einkaufswagen (1) hin wirkenden Kraft zum Inneren des Einkaufswagenkorbes (2) bewegt, der Rahmen (3) um einen Drehpunkt an der Oberseiten der Korböffnung nach oben gedreht wird, was das Verwahren des Einkaufswagens (1) auf klassische Weise ermöglicht.

2. Einkaufswagen nach dem vorhergehenden Anspruch 1, wobei ein Abschnitt (4), der in dem Rahmen (3) bereitgestellt ist, im Wesentlichen die Rolle einer Transportvorrichtung erfüllt, über der eine Last transportiert oder platziert werden kann.

3. Einkaufswagen nach einem der vorhergehenden Ansprüche 1 und 2, wobei ein Abschnitt (4) mit mehreren Abschnitten (4, 5, 6) versehen sein kann, die möglichst verschiedene Funktionen erfüllen.

4. Einkaufswagen nach dem vorhergehenden Anspruch 3, mindestens drei verschiedene Abschnitte (4, 5, 6) umfassend, wobei die Kombination der drei verschiedenen Abschnitte (4, 5, 6) im Wesentlichen einen Kindersitz bildet, der in dem Rahmen (3) bereitgestellt ist.

5. Einkaufswagen nach einem der vorhergehenden Ansprüche 1 bis 4, wobei eine Sicherheitsvorkehrung, vorzugsweise eine Arretierungsvorrichtung (8), bereitgestellt ist, die das Herabfallen mindestens eines Abschnitts (4, 5, 6) verhindert, wenn der mindestens eine Abschnitt (4, 5, 6) gelöst wird.

6. Einkaufswagen nach einem der vorhergehenden Ansprüche 1 bis 5, wobei mindestens ein Abschnitt (4, 5, 6) durch eine Arretierungsvorrichtung (8) gesperrt ist, die an dem Rahmen (3) bereitgestellt ist.

7. Einkaufswagen nach einem der vorhergehenden Ansprüche 1 bis 6, wobei mindestens ein Abschnitt (4, 5, 6) mit Rollelementen (7) versehen ist.

8. Einkaufswagen nach einem der vorhergehenden Ansprüche 1 bis 7, wobei mindestens ein Abschnitt (4, 5, 6), wenn er zurückgeklappt ist, abgestützt ist, was ermöglicht, dass mindestens ein Abschnitt als eine Erweiterung des Bodens des Korbes verwendet wird.

9. Einkaufswagen nach dem vorhergehenden Anspruch 8, wobei der mindestens eine Abschnitt (4, 5, 6) durch eine Stütze abgestützt wird, die an dem Rahmen des Korbes (2) angebracht und möglichst faltbar ist.

10. Einkaufswagen nach einem der vorhergehenden Ansprüche 1 bis 9, wobei der Rahmen (3) und oder mindestens ein Abschnitt (4, 5, 6) aus mehreren Drähten zusammengesetzt ist, die miteinander verschweißt sind.

11. Einkaufswagen nach einem der vorhergehenden Ansprüche 1 bis 9, wobei der Rahmen und/oder mindestens ein Abschnitt (4, 5, 6) gänzlich oder teilweise aus Kunststoff gefertigt sind.

## Revendications

1. Caddie (1) muni d'un hayon (24), ledit hayon comprenant au moins un châssis (3) muni d'au moins une section (4) comprenant les fonctionnalités suivantes :
• la combinaison du châssis (3) et de la section (4) formant un tout si elle est utilisée comme dos du panier de caddie (2) ou si d'autres conditions l'exigent;
• le châssis (3) et la section (4) étant agencés de manière mobile l'un par rapport à l'autre ;
• moyennant quoi, avec un mouvement de déverrouillage sur le châssis (3) ou le panier (2) du caddie (1), la au moins une section (4) peut être repliée par un mouvement de rotation vers l'arrière, créant une ouverture dans la section arrière du panier (1) ;
• **caractérisé en ce qu'**avec une force vers l'avant vers le caddie (1), déplaçant le châssis (3) vers l'intérieur du panier de caddie (2), le châssis (3) pivote vers le haut autour d'un point d'articulation au sommet de l'ouverture du panier, permettant de ranger le caddie (1) de façon classique.

2. Caddie selon la revendication 1 précédente, dans lequel une section (4) prévue dans le châssis (3) joue sensiblement le rôle de dispositif de transport sur lequel une charge peut être transportée ou placée.

3. Caddie selon l'une quelconque des revendications précédentes 1 ou 2, dans lequel une section (4) peut être pourvue de plusieurs sections (4, 5, 6) remplissant éventuellement des fonctions différentes.

4. Caddie selon la revendication précédente 3, comprenant au moins trois sections différentes (4, 5, 6), dans lequel la combinaison des trois sections différentes (4, 5, 6) forme essentiellement un siège pour enfant positionné dans le châssis (3).

5. Caddie selon l'une quelconque des revendications précédentes 1 à 4, dans lequel une mesure de sécurité, de préférence un dispositif de verrouillage (8), est prévue pour empêcher au moins une section (4, 5, 6) de tomber lorsque ladite au moins une section (4, 5, 6) est déverrouillée.

6. Caddie selon l'une quelconque des revendications précédentes 1 à 5, dans lequel au moins une section (4, 5, 6) est bloquée par un dispositif de verrouillage (8) prévu sur le châssis (3).

7. Caddie selon l'une quelconque des revendications précédentes 1 à 6, dans lequel au moins une section (4, 5, 6) est pourvue d'éléments roulants (7).

8. Caddie selon l'une quelconque des revendications précédentes 1 à 7, dans lequel au moins une section (4, 5, 6), lorsqu'elle est repliée, est supportée, ce qui permet d'utiliser ladite au moins une section comme prolongement du fond du panier.

9. Caddie selon la revendication précédente 8, dans lequel ladite au moins une section (4, 5, 6) est supportée par un support fixé au cadre du panier (2) et éventuellement pliable.

10. Caddie selon l'une quelconque des revendications précédentes 1 à 9, dans lequel le châssis (3) et/ou au moins une section (4, 5, 6) sont composés de plusieurs fils qui sont soudés ensemble.

11. Caddie selon l'une quelconque des revendications précédentes 1 à 9, dans lequel le châssis (3) et/ou au moins une section (4, 5, 6) sont construits entièrement ou partiellement en plastique.
